# EUROPÄISCHE PATENTSCHRIFT

(11) **EP 3 850 248 B1**
(45) Veröffentlichungstag und Bekanntmachung des Hinweises auf die Patenterteilung: **01.04.2026**
(21) Anmeldenummer: 19769397.1
(22) Anmeldetag: 05.09.2019
(51) Int. Cl.: F16H 57/04, B60T 10/02, F16H 61/00, B60T 5/00, F16D 57/04, F16D 65/78

(54) **ÖLKÜHLKREISLAUF EINES AUTOMATIKGETRIEBES**
OIL COOLING CIRCUIT OF AN AUTOMATIC TRANSMISSION
CIRCUIT DE REFROIDISSEMENT D'HUILE D'UNE TRANSMISSION AUTOMATIQUE

(30) Priorität: 13.09.2018 DE 102018122333
(43) Veröffentlichungstag der Anmeldung: 21.07.2021
(73) Patentinhaber: Voith Patent GmbH, 89522 Heidenheim (DE)
(72) Erfinder: FÄHNLE, Rainer, 73540 Heubach (DE)
(74) Vertreter: Voith Patent GmbH - Patentabteilung
(86) Internationale Anmeldenummer: PCT/EP2019/073673
(87) Internationale Veröffentlichungsnummer: WO 2020/053058

(56) Entgegenhaltungen:
- DE-A1- 10 138 704
- DE-A1- 10 301 314
- DE-A1- 102015 218 352
- DE-A1- 19 902 408

## Beschreibung

Die vorliegende Erfindung betrifft ein Automatikgetriebe oder automatisiertes Schaltgetriebe für einem Antriebsstrang mit einer Ölversorgung.

Ölversorgungen von Automatikgetrieben oder automatisierten Schaltgetrieben weisen herkömmlich eine Ölpumpe auf, die durch den Verbrennungsmotor angetrieben wird. Die Ölpumpe fördert Öl aus dem Ölsumpf und von diesem in ein Ölversorgungsleitungsnetz zur Ölversorgung von Elementen des Getriebes.

Zu den unterschiedlichen Elementen, die in einem Automatgetriebe oder automatisierten Schaltgetrieben vorhanden sind, zählen Kupplungen, Bremsen, ein Wandler, eine hydrodynamische Bremse (Retarder) sowie die Schmierstellen eines Getriebes.

Die unterschiedlichen Elemente benötigen während des Fahrzeugbetriebs zu unterschiedlichen Zeitpunkten ein sehr unterschiedliches Ölvolumen mit sehr unterschiedlichen Öldrücken.

Für den sicheren und störungsfreien Betrieb eines Automatgetriebes oder automatisierten Schaltgetriebes ist es unter anderem wichtig, dass die Öltemperatur in bestimmten Grenzen bleibt.

Aus der DE 10 2015 218 358 A1 ist ein Ölversorungssystem bekannt, bei dem zur Öltemperaturüberwachung ein Temperatursensor in Strömungsrichtung hinter der Pumpvorrichtung vorgesehen ist, um die Öltemperatur in der Druckleitung zu erfassen. Durch diese Positionierung des Temperatursensors können insbesondere kritische Temperaturen in der Druckleitung erfasst werden. Zur weiteren Verbesserung der Betriebssicherheit kann der Temperatursensor in Strömungsrichtung gesehen hinter dem hydrodynamischen Wandler vorgesehen werden.

Aus der DE 101 38 704 A1 ist ein Kühlsystem bekannt, das zwei Kühlkreisläufe aufweist. Im Betrieb können die Kühlkreisläufe durch eine bestimmte Anordnung von Wärmetauschern getrennt voneinander geregelt werden oder zusammengeschlossen werden. Zur Regelung sind Thermostate vorgesehen.

Aus der DE 10 2015 218 352 A1 ist eine Ölversorgung eines Automatgetriebes bekannt. In dem Ölkreislauf der Ölversorgung sind zwei Wärmetauscher vorgesehen, die je nach Betriebszustand von unterschiedlichen Ölströmen durchströmt werden. Um die Eingangsöltemperatur in den Retarderwärmetauscher zu überwachen ist ein Sensor in der Zuleitung vorgesehen. Der zweite Wärmetauscher in der Druckleitung vor dem Wandler angeordnet, so dass das Öl am Wärmetauscher Eingang die Ölsumpftemperatur aufweist.

Weiterhin ist bekannt zusätzlich die Ölsumpftemperatur zu messen. Die Überwachung der Öltemperatur im Getriebe erfordert also 2 Temperatursensoren.

Der vorliegenden Erfindung liegt die Aufgabe zugrunde, eine Ölversorgung für ein Automatgetriebe oder automatisierten Schaltgetriebe anzugeben, dass eine optimierte Kühlung der Ölvolumenströme bei unterschiedlichen Betriebszuständen ermöglicht.

Es wird ein Automatikgetriebe oder ein automatisiertes Schaltgetriebe für einen Antriebsstrang, mit einem Wandler, einem Retarder und einer Ölversorgung vorgeschlagen, umfassend einen Ölsumpf, einen ersten Wärmetauscher und einen zweiten Wärmetauscher, durch die je nach Betriebszustand des Automatikgetriebes oder automatisierten Schaltgetriebes:
dem Wandlerbetrieb;
dem Fahrbetrieb in einem der mechanischen Gänge;
dem Retarderbetrieb;
ein Ölvolumenstrom leitbar ist.

Zur Optimierung der Kühlung der Ölvolumenströme bei unterschiedlichen Betriebszuständen wird erfindungsgemäß vorgeschlagen, dass zwei Wärmetauscher vorgesehen sind, durch die je nach Betriebszustand des Automatikgetriebes ein Ölvolumenstrom leitbar ist. Bei der Verwendung von zwei Wärmetauschern können diese jeweils an die Bedingungen der Betriebszustände angepasst werden, so dass die Kühlung der entsprechenden Ölvolumenströme verbessert wird.

Erfindungsgemäß sind erster und zweiter Wärmetauscher parallel zueinander angeordnet, wobei ein erstes Umschaltventil und ein zweites Umschaltventil vorgesehen sind, so dass im Wandlerbetrieb und im Fahrbetrieb ein von der Ölversorgung kommender Ölvolumenstrom in zwei Ölvolumenströme aufgeteilt wird und die parallel durch den ersten und zweiten Wärmetauscher geleitet werden, und wobei der von der Ölversorgung kommende Ölvolumenstrom im Retarderbetrieb über den ersten Wärmetauscher und ein durch den Retarder strömender Ölvolumenstrom durch den zweiten Wärmetauscher geleitet wird.

Die im Ölkühlkreislauf vorgesehenen Ventile können weiterhin die Ölvolumenströme regelen . Dies können insbesondere die Ventile zur Regelung des Wandlers und des Retarders sein.

Weiterhin ist eine Messvorrichtung zur Messung einer Ölkreislauftemperatur vorgesehen , mittels der in allen Betriebszuständen die Temperatur des Ölvolumenstroms messbar ist. Somit kann je Betriebszustand immer die kritischste Temperatur überwacht werden und die Funktion des Getriebes sichergestellt werden, ohne dabei Gefahr zu laufen, das Öl zu überhitzen.

Weiterhin ist der zweite Wärmetauscher derart in die Ölversorgung geschaltet, dass in jedem Betriebszustand ein Ölvolumenstrom durch den zweiten Wärmetauscher geleitet wird, wobei der Sensor am Wärmetauschereinlass des zweiten Wärmetauschers angeordnet ist, mittels dem die Temperatur des zugeführten Ölvolumenstroms in den zweiten Wärmetauscher messbar ist.

Im Falle einer potentiellen Ölüberhitzung können Abregelstrategien vorgesehen sein, um die Temperatur des Ölvolumenstroms für einen Betriebszustand auf einem gewünschten Niveau zu halten bzw. dieses zu regeln. So kann im Wandlerbetrieb die Temperatur des Ölvolumenstroms durch den Wandler, im Retarderbetrieb die Temperatur des Ölvolumenstroms durch den Retarder und im Fahrbetrieb, bei dem einer der mechanischen Gänge in Betrieb ist, die Ölsumpftemperatur gemessen werden.

In einer bevorzugten Ausführung ist für den Wandlerbetrieb und den Fahrbetrieb vorgesehen beide Wärmetauscher und für den Retarderbetrieb nur den zweiten Wärmetauscher zu nutzen.

Weiterhin umfasst die erfindungsgemäße Messvorrichtung einen Sensor , mittels dem die Temperatur des Ölvolumenstroms, der in den zweiten Wärmetauscher strömt, messbar ist. Insbesondere bei der Verwendung eines 2-flutigen Wärmetauschers, bei dem die Vorlaufanschlüsse in die zwei Wärmetauscherkanäle für die Ölvolumenströme dicht beieinander liegen, erfolgt bei einem starken Temperaturanstieg des Ölstroms in dem ersten Wärmetauscher eine gewisser Wärmeübertragung auf den Vorlaufanschluss des zweiten Wärmetauschers, so dass durch die Wärmeübertragung auch eine solcher Temperaturanstieg erfassbar ist.

Durch eine Position des Temperatursensors vor dem Wärmetauschereinlass des zweiten Wärmetauschers, können je nach Betriebszustand des Getriebes unterschiedliche Temperaturen gemessen werden, weil in allen Betriebszuständen ein Ölvolumenstrom durch den zweiten Wärmetauscher geleitet wird. Somit kann auf einen zweiten Temperatursensor verzichtet werden.

In einer weiteren Ausführungsvariante können die Wärmetauscher für unterschiedliche Ölvolumenströme ausgelegt sein. Bei einem 2-flutigen Wärmetauscher können beispielsweise die Kanäle durch den Wärmetauscher unterschiedlich ausgelegt sein.

So können die Ölvolumenströme durch den ersten Wärmetauscher und den zweiten Wärmetauscher bevorzugt in einem Verhältnis von 1:2 ausgelegt sein. Wobei auch andere Verhältnisse denkbar sind, die im Bereich von 1: 1,25 bis 1:3 liegen.

So kann ein Druckregelventil zur Regelung des Ölvolumenstroms durch den Wandler vorgesehen sein, wobei das Druckregelventil zwischen Wandler und dem ersten und zweiten Wärmetauscher vorgesehen ist.

Das erste Schaltventil kann derart schaltbar sein, dass im Fahrbetrieb, in einem der mechanischen Gänge des Automatikgetriebes, der Ölvolumenstrom aus dem Ölsumpf über eine Bypassleitung durch den zweiten Wärmetauscher und/oder den ersten Wärmetauscher leitbar ist.

Anhand von Ausführungsbeispielen werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Die Figuren zeigen im Einzelnen:
- Fig.1: Funktionsschema des Ölkreislaufes zur Ölversorgung
- Fig.2: Ansicht auf die Wärmetauscherkonsole

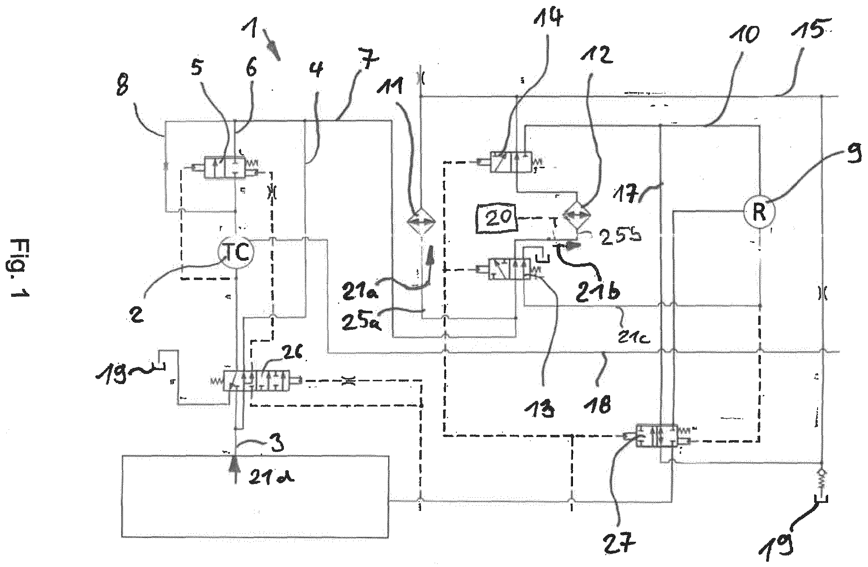

In Figur 1 ist das Funktionsschema des erfindungsgemäßen Ölkreislaufes zur Ölversorgung eines Automatikgetriebes dargestellt. Dabei wurde das Schema auf die erfindungsrelevanten Details, die für die Ölkühlung notwendig sind, reduziert.

Eine nicht dargestellte Pumpe fördert das Öl aus dem Ölsumpf 19 über die Ölzuführleitung 3 zu allen relevanten Bauteilten im Getriebe, so dass die Ölversorgung für zumindest folgende Betriebszustände des Automatikgetriebes sichergestellt ist;
dem Wandlerbetrieb;
dem Fahrbetrieb in einem der mechanischen Gänge;
dem Retarderbetrieb.

Diese drei Betriebszustände bewirken einen Energieeintrag in das Öl der zu einer Temperaturerhöhung des Öls führt. Beim Anfahren des Kraftfahrzeugs wird das Getriebe mittels des Ventils 26 in den Wanderbetrieb geschaltet. Für den Wanderbetrieb wird das Regelventil 5 derart geregelt, dass zumindest ein Teilvolumenstrom des von der Pumpe geförderten Ölvolumenstrom 21d durch den Wandler 2 geleitet wird.

Aufgabe des Regelventils 5 ist es, die Leistungsregelung des Wandlers 4 zu regeln, auf die hier nicht näher eingegangen wird. Das erhitzte Öl, also ein Ölvolmenstrom wird über die Leitung 6 und die WT-Zuführleitung 7 zu den Wärmetauschern 11 und 12 geleitet.

Im Fahrbetrieb, in einem der mechanischen Gänge des Automatikgetriebes, wird der Ölvolumenstrom 21d aus dem Ölsumpf 19 über die Bypassleitung 4, die Leitung 6 und die WT-Zuführleitung 7 zu den Wärmetauschern 11 und 12 geleitet.

Hier sind nun unterschiedliche Schaltungen möglich. In der dargestellten Schaltstellung des ersten Schaltventils 13 wird der Ölvolumenstrom 21 d vom Wandler 2 kommend durch den zweiten Wärmetauscher 12 und den ersten Wärmetauscher 11 geleitet. Der Ölvolumenstrom 21d teilt sich in die Ölvolumenströme 21a und 21b auf.

Denkbar ist aber auch, dass nur das erste Schaltventil 13 in die zweite Schaltstellung geschaltet wird, so dass der Ölvolumenstrom 21d vom Wandler 2 oder Bypass 4 kommend über den Verbindungskanal 25 a nur durch den ersten Wärmetauscher 11 geleitet wird. Der Ölvolumenstrom 21d entspricht dem Ölvolumenstrom 21a.

Im Retarderbetrieb werden dagegen die beiden Umschalt-Ventile 13 und 14 gleichzeitig geschaltet, so dass nur der zweite Wärmetauscher 12 im Retarderbetrieb zur Kühlung des Öls genutzt wird, um die Bremsenergie abzuführen. Auf die Retarderregelung wird im Zusammenhang mit dieser Erfindung nicht weiter eingegangen.

Alternativ könnte aber auch vorgesehen sein, dass in einem ersten Schritt das Umschalt-Ventil 14 geschaltet wird, so dass der Retarder befüllt wird, und, spätestens wenn die Befüllung abgeschlossen ist, auch das Umschaltventil 13 geschaltet wird, so dass der gesamte Ölvolumenstrom 21c durch den Retarder 9 gepumpt und über den Verbindungskanal 25b durch den Wärmetauscher 12 geleitet wird.

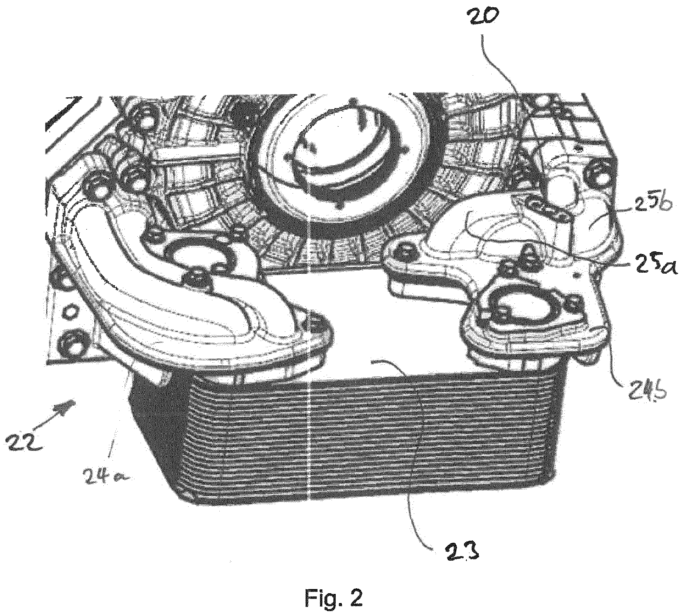

Entscheidend für die Erfindung ist weiterhin die Messvorrichtung 20 deren Position im Bereich des Verbindungskanals 25 b in Figur 2 näher dargestellt ist. Diese ist zur Messung der Temperatur des Ölvolumenstroms 21 b vorgesehen. Der eine Sensor der Messvorrichtung 20 ist am Verbindungskanal 25 b angeordnet. Die Temperatur des Ölvolumenstroms 21b in den zweiten Wärmetauscher 12 kann so für alle Betriebszustände gemessen werden.

Da in allen Betriebszuständen ein Ölvolumenstrom über den Verbindungskanal 25 b geleitet wird, kann für alle Betriebszustände die Temperatur des Ölvolumenstroms 21 b gemessen werden. Somit können in jedem Betriebszustand kritische Temperaturgrenzen überwacht werden. Die Funktion des Getriebes ist damit sichergestellt bzw. das Öl wird vor Überhitzung geschützt.

Im Falle einer potentiellen Ölüberhitzung greifen Abregelstrategien, mit denen die Öltemperatur auf festlegbare Grenztemperaturen geregelt wird. Zum Beispiel die Reduzierung der Bremsleistung des Retarders.

Auf die weiteren dargestellten Leitungen und Elemente des Ölkreislaufs wird im Zusammenhang mit dieser Erfindung nicht näher eingegangen, da diese zur Erläuterung der Erfindung nicht relevant sind. Zur Gesamtfunktionalität des Getriebes sind diese allerdings notwendig.

### Bezugszeichenliste

- 1: Ölkreislauf
- 2: Wandler
- 3: Ölzuführleitung
- 4: Bypassleitung
- 5: Ventil - Wandlerregelung
- 6: Leitung
- 7: WT-Zuführleitung
- 8: Leckstromleitung
- 9: Retarder
- 10: Zuführleitung
- 11: Wärmetauscher
- 12: Wärmetauscher
- 13: Umschalt-Ventil
- 14: Umschalt-Ventil
- 15: Rückführleitung
- 16: Kernringbefüllleitung
- 17: Spaltbefüllleitung
- 18: Rückführleitung
- 19: Ölsumpf
- 20: Messvorrichtung mit Sensor
- 21a, b, c, d: Ölvolumenstrom
- 22: Wärmetauscherkonsole
- 23: Wärmetauscher
- 24a, b: Halter
- 25: Verbindungskanäle
- 26,27: Ventile

## Patentansprüche

1. Automatikgetriebe oder automatisiertes Schaltgetriebe für einen Antriebsstrang, mit einem Wandler (2), einem Retarder (9) und einer Ölversorgung, umfassend einen Ölsumpf (19), einen ersten Wärmetauscher (11) und einen zweiten Wärmetauscher (12), durch die je nach Betriebszustand des Automatikgetriebes oder automatisierten Schaltgetriebes:
dem Wandlerbetrieb
dem Fahrbetrieb in einem der mechanischen Gänge
dem Retarderbetrieb;
ein Ölvolumenstrom (21a, b, c) leitbar ist,
**dadurch gekennzeichnet, dass**
erster und zweiter Wärmetauscher (11, 12) parallel zueinander angeordnet sind, wobei ein erstes Umschaltventil (13) und ein zweites Umschaltventil (14) vorgesehen sind, so dass im Wandlerbetrieb und im Fahrbetrieb ein von der Ölversorgung kommender Ölvolumenstrom (21d) in zwei Ölvolumenströme (21a und 21b) aufgeteilt wird, die parallel durch den ersten und zweiten Wärmetauscher (11, 12) geleitet werden, und wobei der von der Ölversorgung kommende Ölvolumenstrom (21d) im Retarderbetrieb über den ersten Wärmetauscher (11) und ein durch den Retarder (9) strömender Ölvolumenstrom (21c) durch den zweiten Wärmetauscher geleitet wird, wobei eine Messvorrichtung (20) zur Messung einer Ölkreislauftemperatur vorgesehen ist, die einen Sensor umfasst, wobei der Sensor am Wärmetauschereinlass des zweiten Wärmetauschers (12) angeordnet ist, mittels dem die Temperatur des zugeführten Ölvolumenstroms (21b) in den zweiten Wärmetauscher (12) messbar ist.

2. Automatikgetriebe nach Anspruch 1
**dadurch gekennzeichnet, dass**
die Wärmetauscher (11, 12) für unterschiedliche Ölvolumenströme (21 a, b) ausgelegt sind.

3. Automatikgetriebe nach Anspruch 1
**dadurch gekennzeichnet, dass**
die Ölvolumenströme (21 a, b) durch den ersten Wärmetauscher (11) und den zweiten Wärmetauscher in einem Verhältnis von 1:2 ausgelegt sind.

4. Automatikgetriebe nach Anspruch 1
**dadurch gekennzeichnet,**
**dass** ein Druckregelventil (5) zur Regelung des Ölvolumenstroms (21d) durch den Wandler (2) vorgesehen ist, wobei das Druckregelventil (5) zwischen Wandler (2) und dem ersten und zweiten Wärmetauscher (11, 12) vorgesehen ist.

5. Automatikgetriebe nach Anspruch 4
**dadurch gekennzeichnet,**
**dass** ein Ventil (26) derart schaltbar ist, dass im Fahrbetrieb, in einem der mechanischen Gänge des Automatikgetriebes, der Ölvolumenstrom (21 d) aus dem Ölsumpf (19) über eine Bypassleitung (4) durch den zweiten Wärmetauscher (12) und den ersten Wärmetauscher (11) geleitet wird.

## Claims

1. Automatic transmission or automated manual transmission for a drive train, having a converter (2), having a retarder (9) and having an oil supply, comprising an oil sump (19) and a first heat exchanger (11) and a second heat exchanger (12), through which, according to the operating state of the automatic transmission or automated manual transmission:
converter operation
driving operation for one of the mechanical gears retarder operation;
an oil volume stream (21a, b, c) is able to be conducted, **characterized in that**
the first and second heat exchangers (11, 12) are arranged in a parallel manner with respect to one another, wherein provision is made of a first switching valve (13) and a second switching valve (14) so that, during converter operation and during driving operation, an oil volume stream (21d) coming from the oil supply is divided into two oil volume streams (21a and 21b) which are conducted in parallel through the first and second heat exchangers (11, 12), and wherein the oil volume stream (21d) coming from the oil supply, during retarder operation, is conducted via the first heat exchanger (11) and an oil volume stream (21c) flowing through the retarder (9) is conducted through the second heat exchanger, wherein provision is made of a measuring device (20) for measuring an oil circuit temperature that comprises a sensor, wherein the sensor is arranged at the heat exchanger inlet of the second heat exchanger (12), by means of which sensor the temperature of the fed oil volume stream (21b) into the second heat exchanger (12) is measurable.

2. Automatic transmission according to Claim 1,
**characterized in that**
the heat exchangers (11, 12) are configured for different oil volume streams (21 a, b).

3. Automatic transmission according to Claim 1,
**characterized in that**
the oil volume streams (21 a, b) through the first heat exchanger (11) and the second heat exchanger are configured according to a ratio of 1:2.

4. Automatic transmission according to Claim 1,
**characterized**
**in that** provision is made of a pressure regulating valve (5) for regulating the oil volume stream (21d) through the converter (2), wherein the pressure regulating valve (5) is provided between the converter (2) and the first and second heat exchangers (11, 12).

5. Automatic transmission according to Claim 4,
**characterized**
**in that** a valve (26) is switchable in such a way that, during driving operation, for one of the mechanical gears of the automatic transmission, the oil volume stream (21 d) is conducted through the second heat exchanger (12) and the first heat exchanger (11) from the oil sump (19) via a bypass line (4).

## Revendications

1. Transmission automatique ou transmission manuelle automatisée pour une chaîne cinématique, avec un convertisseur (2), un ralentisseur (9) et une alimentation en huile, comprenant un carter d'huile (19), un premier échangeur de chaleur (11) et un deuxième échangeur de chaleur (12), à travers lesquels, en fonction de l'état de fonctionnement de la transmission automatique ou de la transmission manuelle automatisée :
le fonctionnement en mode convertisseur
le fonctionnement en mode de conduite dans l'un des rapports mécaniques
le fonctionnement en mode ralentisseur ;
un débit volumique d'huile (21a, b, c) peut être acheminé,
**caractérisée en ce que**
les premier et deuxième échangeurs de chaleur (11, 12) sont disposés parallèlement l'un à l'autre, une première soupape de commutation (13) et une deuxième soupape de commutation (14) étant prévues de telle sorte que, dans le fonctionnement en mode convertisseur et dans le fonctionnement en mode de conduite, un débit volumique d'huile (21d) provenant de l'alimentation en huile est divisé en deux débits volumiques d'huile (21a et 21b) qui sont acheminés en parallèle à travers les premier et deuxième échangeurs de chaleur (11, 12), et le débit volumique d'huile (21d) provenant de l'alimentation en huile étant acheminé, dans le fonctionnement en mode ralentisseur, à travers le premier échangeur de chaleur (11) et un débit volumique d'huile (21c) s'écoulant à travers le ralentisseur (9) étant acheminé à travers le deuxième échangeur de chaleur, un dispositif de mesure (20) étant prévu pour mesurer une température de circulation d'huile, lequel comprend un capteur, le capteur étant disposé à l'entrée d'échangeur de chaleur du deuxième échangeur de chaleur (12), au moyen duquel la température du débit volumique d'huile (21b) alimenté dans le deuxième échangeur de chaleur (12) peut être mesurée.

2. Transmission automatique selon la revendication 1,
**caractérisée en ce que**
les échangeurs de chaleur (11, 12) sont conçus pour des débits volumiques d'huile différents (21a, b).

3. Transmission automatique selon la revendication 1,
**caractérisée en ce que**
les débits volumiques d'huile (21 a, b) à travers le premier échangeur de chaleur (11) et le deuxième échangeur de chaleur sont conçus dans un rapport de 1:2.

4. Transmission automatique selon la revendication 1,
**caractérisée**
**en ce qu'**une soupape de régulation de pression (5) est prévue pour réguler le débit volumique d'huile (21D) à travers le convertisseur (2), la soupape de régulation de pression (5) étant disposée entre le convertisseur (2) et les premier et deuxième échangeurs de chaleur (11, 12).

5. Transmission automatique selon la revendication 4,
**caractérisée**
**en ce qu'**une soupape (26) peut être commutée de telle sorte que, dans le fonctionnement en mode de conduite, dans l'un des rapports mécaniques de la transmission automatique, le débit volumique d'huile (21d) provenant du carter d'huile (19) est acheminé par une conduite de dérivation (4) à travers le deuxième échangeur de chaleur (12) et le premier échangeur de chaleur (11).
